Europäisches Patentamt

European Patent Office

Office européen des brevets

(11) Numéro de publication: **0 054 481**
**A1**

## (12) DEMANDE DE BREVET EUROPEEN

(21) Numéro de dépôt: **81401964.2**

(22) Date de dépôt: **09.12.81**

(51) Int. Cl.³: **B 23 B 27/14**

(30) Priorité: **12.12.80 FR 8026426**

(43) Date de publication de la demande:
**23.06.82 Bulletin 82/25**

(84) Etats contractants désignés:
**AT BE CH DE FR GB IT LI LU NL SE**

(71) Demandeur: **FELDMUHLE PRODUITS TECHNIQUES FRANCE**
**53 Rue Charles Frérot**
**F-94250 Gentilly(FR)**

(72) Inventeur: **Habert, Guy**
**86 Rue Charles de Gaulle Bondoufle**
**F-91000 Evry(FR)**

(74) Mandataire: **Rinuy, Guy et al,**
**14, Avenue de la Grande Armée**
**F-75017 Paris(FR)**

(54) **Procédé de réalisation d'arêtes de coupe et plaquettes ou autres matériaux de coupe montrant ces nouvelles arêtes.**

(57) Le but de l'invention est de réduire la rugosité sans pour autant augmenter l'ondulation, donc l'effort de coupe et l'invention vise un procédé de réalisation consistant à diviser le profil de l'arête de coupe en au moins deux parties : - une partie de rayon de grande valeur pouvant varier jusqu'à l'infini (1) et - une partie droite, sensiblement droite ou rayonnée (2).

L'invention est applicable à la réalisation de plaquettes nouvelles ou autres matériaux de coupe nouveaux, comme à la modification de plaquettes et matériaux de coupe déjà existants utilisés en tournage et alésage.

FIG.2

"Procédé de réalisation d'arêtes de coupe et plaquettes ou autres matériaux de coupe montrant ces nouvelles arêtes"

La présente invention se rapporte à un procédé de réalisation d'arêtes de coupe ainsi qu'aux plaquettes ou autres matériaux de coupe montrant ces nouvelles arêtes.

Les plaquettes de coupe proposées sur le marché utilisées en tournage et alésage, à l'exception du fraisage et quelle qu'en soit la géométrie (carré, triangulaire, rhombique, positives ou négatives) ont une arête de coupe comportant un rayon variant généralement de 0,4 à 3 mm. Ce rayon engendre un état de surface sur la pièce à usiner, qui varie en fonction de sa valeur. En théorie, plus le rayon de plaquette est grand, plus l'état de surface produit est bon. Cette valeur est également dépendante de l'avance de l'outil.

Toutefois l'effort de coupe croissant en fonction d'un accroissement de la valeur du rayon de plaquette, il produit des déformations sur la pièce usinée, cette augmentation d'effort étant de plus proportionnelle à la longueur d'arête de la coupe en contact.

Les défauts d'état de surface appelés micro-géométriques (rugosité) sont d'autant plus faibles que le rayon est grand. En revanche les défauts macrogéométriques (ondulation) augmentent en fonction d'un accroissement de la valeur du rayon.

Le but de l'invention est de réduire la rugosité, sans pour autant augmenter l'ondulation, donc l'effort de coupe et l'invention vise un procédé de réalisation d'arête de coupe applicable à la réalisation de plaquettes nouvelles ou autres matériaux de coupe nouveaux, comme à la modification de plaquettes et matériaux de coupe déjà existants.

Le procédé selon l'invention consiste à diviser le profil de l'arête de coupe en au moins deux parties :

- une partie de rayon de grande valeur et
- une partie droite, sensiblement droite ou rayonnée.

La partie droite ou rayonnée peut être choisie de manière à ce que son profil soit le plus proche possible de celui de la plaquette ou matériau de coupe standard faisant en soi l'objet de l'intervention ou pris comme référence.

Afin de rendre la plaquette ou le matériau de coupe réversible, une autre partie de rayon de grande valeur est prévue de l'autre côté de la partie droite ou rayonnée, celle-ci étant ainsi entourée en-deçà et au-delà de deux parties de grand rayon.

Le procédé selon l'invention est applicable à toutes les géométries de plaquettes, d'un rayon de 0,8 à 3 mm et plus, ainsi qu'à tout matériau de coupe.

Il est à noter que le coût d'une modification en série d'une plaquette de coupe ou d'un matériau de coupe déjà existant est relativement faible. Cette modification peut notamment intervenir sur le gabarit de rectification de la plaquette ou sur le moule de frittage.

D'autres caractéristiques et avantages de la présente invention ressortiront de la description qui va suivre faite en regard du dessin annexé sur lequel :

la figure 1 est un schéma, à grande échelle, représentant le profil, en section droite, d'une arête de coupe d'une plaquette de coupe standard dans deux positions différentes au cours de son avance par rapport à une pièce à usiner ; et

la figure 2 est un schéma, à la même échelle représentant le profil, en section droite, d'une arête de coupe conforme à l'invention et, également, suivant deux positions différentes au cours de son avance par rapport à la pièce à usiner.

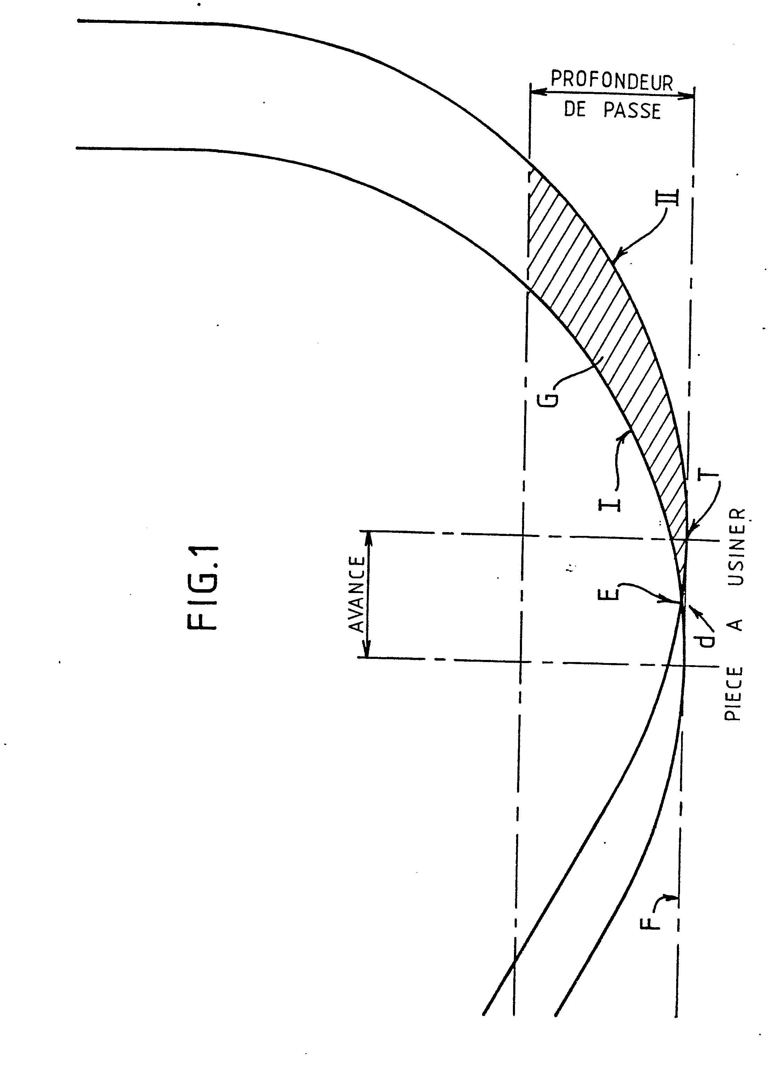

Sur le schéma représenté à la figure 1, la figure géométrique (G) réalisée entre le profil, en section droite, de l'arête de coupe de la plaquette standard, dans une première position (I) et ce même profil dans une deuxième position (II) due à l'avance de l'outil et, compte tenu de la profondeur de passe, est une lunule.

Cette lunule, qui peut être assimilée au copeau retranché de la pièce usinée, montre un point de tangence (T) par rapport à la face (F) de la pièce usinée, ce point de tangence se trouvant à quelque distance de la pointe ou extrémité (E) de la lunule. Il est à remarquer, également, que ladite extrémité (E) de la lunule se relève d'une distance (d) par rapport à la face (F) et que cette extrémité relevée est pour beaucoup génératrice des défauts d'état de surface que la présente invention se propose de combattre.

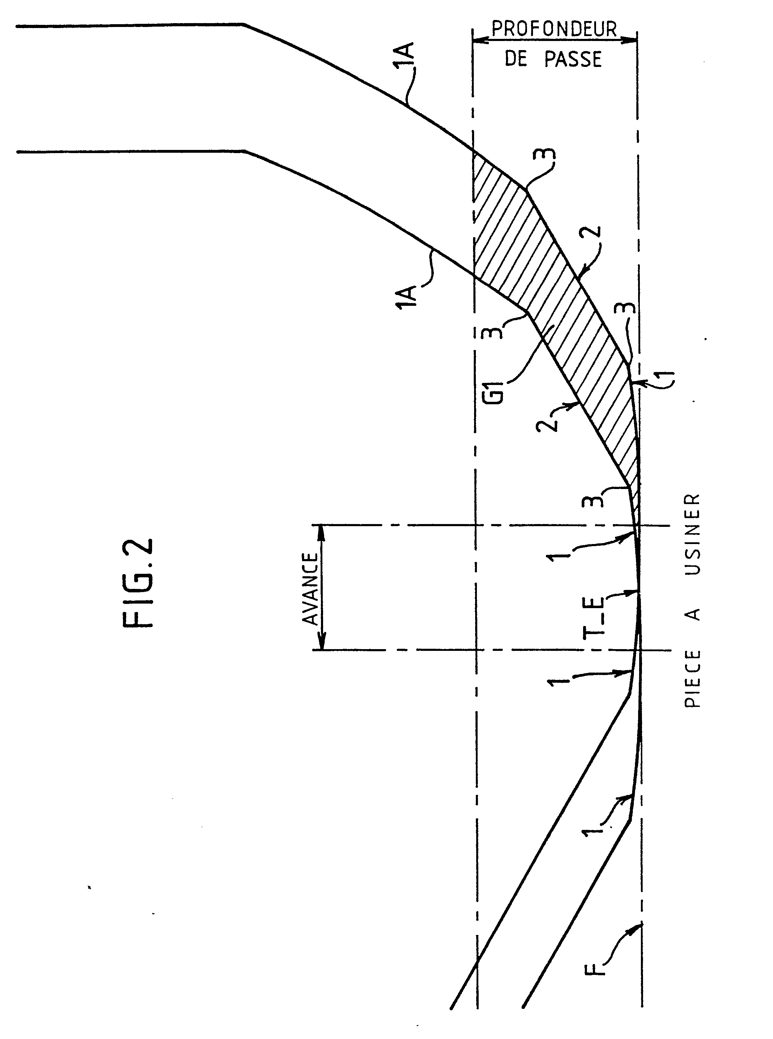

Le schéma de la figure 2 qui représente le profil en section droite d'une arête de coupe conforme à l'invention montre une partie (1) de rayon de grande valeur pouvant varier jusqu'à l'infini en contact avec la face (F) et une partie (2) droite ou sensiblement droite ou rayonnée.

Les parties (1) et (2) dans leur avance par rapport à la pièce usinée, tout en considérant la profondeur de passe, déterminent une figure géométrique (G1) voisine d'une lunule comme sur la figure 1, mais sans présenter l'inconvénient de l'extrémité relevée (E). Sur la figure 2, le point de tangence (T) (ou arête) et l'extrémité (E) de la lunule se confondent et la tangence avec la face usinée peut être même une surface de tangence, d'où l'amélioration apportée par l'invention, la rugosité étant réduite sans pour autant augmenter l'ondulation.

Afin de rendre la plaquette ou le matériau de coupe réversible, une autre portion (1A), également de rayon de grande valeur, est prévue de l'autre côté de la partie droite ou rayonnée (2).

Afin de rendre la figure géométrique (G1) plus proche d'une lunule, tout en conservant le grand rayon adopté pour les parties (1) et (1A) et l'allure sensiblement droite de la partie (2), les points (ou arêtes) (3) de rencontre entre ces parties peuvent être arrondis améliorant ainsi la coupe.

Un exemple de réalisation de l'invention se rapporte à une plaquette très couramment utilisée en finition : une "TNGN 16 04 12"; il s'agit d'une plaquette triangulaire, de cercle inscrit, ∅ 9,52, d'épaisseur 4,76 et de rayon 1,2 mm.

La plaquette modifiée conformément à l'invention a permis d'utiliser un rayon de 3 mm. La valeur de ce rayon a été choisie d'une façon arbitraire et n'est bien sûr pas limitative. Cet exemple de réalisation a, de plus, permis de vérifier, que la rugosité a été améliorée de quatre fois environ, que l'ondulation n'a pas été augmentée pour autant et qu'aucun défaut géométrique supérieur à celui provoqué par la plaquette standard n'a été observé.

L'expression "partie rayonnée" utilisée dans le texte ci-dessus est bien entendu générique pour désigner aussi bien une partie de cercle ou une partie de conique (parabole, ellipse ou hyperbole) à rayons issus d'un foyer ou de deux foyers.

Il est bien entendu, enfin, que la présente invention n'a été décrite et représentée qu'à titre d'exemple préférentiel et qu'on pourra apporter des équivalences dans ses éléments constitutifs sans, pour autant, sortir du cadre de l'invention.

## REVENDICATIONS

1. Procédé de réalisation d'arêtes de coupe sur des plaquettes ou autres matériaux de coupe utilisées en tournage et alésage, lequel procédé se caractérise en ce qu'il consiste à diviser le profil de l'arête de coupe en au moins deux parties :

- une partie de rayon de grande valeur pouvant varier jusqu'à l'infini et

- une partie droite, sensiblement droite ou rayonnée.

2. Procédé selon la revendication 1, caractérisé en ce que la partie droite ou rayonnée peut être choisie de manière à ce que son profil soit le plus proche possible de celui de la plaquette ou matériau de coupe standard faisant en soi l'objet de l'intervention ou pris comme référence.

3. Procédé selon l'une quelconque des revendications 1 et 2, caractérisé en ce qu'une autre partie de rayon de grande valeur est prévue de l'autre côté de la partie droite ou rayonnée, celle-ci étant ainsi entourée en deçà et au-delà de deux parties de grand rayon afin de rendre la plaquette ou le matériau de coupe réversible.

4. Plaquettes et autres matériaux de coupe obtenus conformément au procédé selon les revendications 1 et 2, caractérisés en ce qu'ils montrent au moins la partie de rayon de grande valeur (1) et la partie droite, sensiblement droite ou rayonnée (2).

5. Plaquettes et autres matériaux de coupe selon la revendication 4, caractérisés en ce que le profil de l'arête de coupe montre deux parties de grand rayon (1) et (1A) de part et d'autre de la partie droite, sensiblement droite ou rayonnée (2).

6. Plaquettes et autres matériaux de coupe selon l'une quelconque des revendications 4 et 5, caractérisés en ce que les points ou arêtes (3) de rencontre entre les différentes parties du profil sont arrondis.

FIG.1

PROFONDEUR
DE PASSE

II

G

I

T

E

AVANCE

d

PIECE A USINER

F

FIG.2

AVANCE

PROFONDEUR DE PASSE

1A

1A

G1

3

3

3

2

2

1

1

1

1

3

3

1

T_E

F

PIECE A USINER

**Office européen des brevets**

## RAPPORT DE RECHERCHE EUROPEENNE

EP 81 40 1964

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendica-tion concernée | |
| X | MACHINERY, volume 103, 7 août 1963, Machinery Publishing Co. LONDRES (GB) L. HISING "Developments in Uddex throw-away tip cutters", page 303 | | B 23 B 27/14 |
| | * page 303; figure 2 * | 1-5 | |
| | -- | | |
| X | FR - A - 2 323 474 (UGINE CARBONE) | | |
| | * page 3, lignes 37-40; figures 1,2 * | 1,6 | **DOMAINES TECHNIQUES RECHERCHES (Int. Cl. 3)** |
| | -- | | |
| A | DE - A - 2 820 810 (KIESERLING) | | B 23 B 27/00 |
| A | DE - A - 2 610 097 (SCHUBERT) | | |
| A | DE - A - 2 307 229 (SUMITOMO) | | |
| A | FR -A - 2 428 491 (ROCHLING-BURBACH WEITERVERARBEITUNG G.m.b.H.) | | |
| A | US - A - 3 229 349 (LEKSELL) | | |
| | ---------- | | |

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 02-03-1982 | BOGAERT |

OEB Form 1503.1  06.78